Europäisches Patentamt

European Patent Office

Office européen des brevets

(11) Numéro de publication : **0 490 785 A1**

## (12) DEMANDE DE BREVET EUROPEEN

(21) Numéro de dépôt : **91420428.4**

(22) Date de dépôt : **03.12.91**

(51) Int. Cl.$^5$ : **F16L 1/08**, B25B 27/16

(30) Priorité : **14.12.90 FR 9016046**

(43) Date de publication de la demande :
**17.06.92 Bulletin 92/25**

(84) Etats contractants désignés :
**BE CH DE ES GB LI LU NL**

(71) Demandeur : **Bibollet, Bruno**
**8, Chemin des Vergers**
**F-74370 Metz-Tessy (FR)**

(72) Inventeur : **Bibollet, Bruno**
**8, Chemin des Vergers**
**F-74370 Metz-Tessy (FR)**

(74) Mandataire : **Gasquet, Denis**
**CABINET GASQUET, Les Pléiades, Park-Nord**
**Annecy**
**F-74370 Metz Tessy (FR)**

(54) **Perfectionnement pour outil destiné à l'emboîtement de canalisations.**

(57)    Outil destiné à l'emboîtement de canalisations comprenant un ensemble de manoeuvre (10) relié à un ensemble d'accrochage (8) par des moyens de traction (9) ledit ensemble de manoeuvre (10) étant constitué par un levier (6) s'étendant vers le haut, relié à des moyens d'appui (7), tandis que l'ensemble d'accrochage (8) comprend une pièce d'appui (18) et des moyens de serrage (19) caractérisé en ce que ladite pièce d'appui (18) est constitué par une partie centrale d'appui (22) prolongée latéralement de part et d'autre par deux prolongements latéraux (20,21), lesdits moyens de serrage (19) étant reliés à deux bras mobiles de retenue (23,24) liés chacun de façon mobile et réglable à l'un des prolongements latéraux par une succession de moyens de liaison disposés de façon à s'étendre vers l'extérieur et vers le bas.

FIG 2

EP 0 490 785 A1

La présente invention concerne un outil destiné à être utilisé pour l'emboîtement de tuyaux. Elle concerne plus particulièrement un perfectionnement de ses moyens d'accrochage.

La civilisation moderne est de plus en plus consommatrice de différents produits dont certains liquides ou gazeux sont transportés dans des canalisations. Ainsi sont acheminés couramment par des canalisations enterrées ou non, voire même immergées, de l'eau potable, des eaux industrielles ou résiduaires, des liquides alimentaires, des hydrocarbures, des produits chimiques, des gaz combustibles naturels ou manufacturés, de l'air comprimé ou de l'oxygène. Ce mode de transport est idéal par l'automaticité et la souplesse de son fonctionnement, et la régularité et l'économie du service assuré. Aussi des constructeurs voyant là, l'importance d'un marché en pleine expansion, ont mis au point des tuyaux généralement en fonte ductile de différentes formes et dimensions. Ces tuyaux sont vendus par unités des quelques mètres de longueur qui doivent être assemblées l'une à l'autre, pour constituer la longueur désirée, qui peut aller de quelques mètres à plusieurs dizaines voire même centaines de kilomètres. Certains modes d'assemblage sont réalisés par un simple joint déformable en élastomère qui par déformation assure l'étanchéité de la jointure une fois les deux tuyaux ou canalisations emboîtés.

Ainsi, pour assembler deux tuyaux, il suffit de faire pénétrer à force le bout uni de l'un dans l'emboîtement de l'autre muni de son joint déformable. L'emboîtement doit être bien fait, et c'est là une opération délicate et difficile, car le joint circulaire déformable s'oppose à la pénétration. Cette manoeuvre est d'autant plus délicate qu'elle se pratique généralement dans des conditions difficiles, par exemple dans une tranchée, et sous les intempéries.

Pour les tuyaux de petit diamètre, l'emboîtement est réalisé par deux personnes, dont l'une maintient l'extrémité du tuyau à emboîter, tandis que l'autre réalise la pénétration à l'aide d'une barre à mine ou similaire. Ce mode d'emboîtement nécessite deux personnes, et il leur est difficile de maintenir le tube à emboîter dans l'axe de celui qui doit le recevoir. De plus l'extrémité libre du tuyau sur lequel la barre à mine s'appuie doit être protégée par exemple par une pièce de bois.

Pour les tuyaux de gros diamètre, l'emboîtement est réalisé par un ou plusieurs palans à câble, avec élingues et crochets. L'opération est donc longue et délicate, et nécessite de la main d'oeuvre et un outillage important, coûteux et difficile à mettre en place.

Il a déjà été proposé par le demandeur dans son brevet français publié sous le numéro 2 615 267, un nouvel outil particulièrement simple et peu coûteux qui permet de réaliser très facilement l'emboîtement des canalisations. Mais étant donné la diversité des diamètres des tubes à emboîter, il a fallu mettre au point un perfectionnement et c'est le but de cette invention.

Le dispositif selon l'invention permet, grâce à son système de réglage, l'emboîtage de canalisations de différents diamètres. De plus, la largeur hors tout de l'apareil est fonction de la largeur de la canalisation à l'emboîter. Ce qui est particulièrement intéressant, car si l'outil n'avait pas la structure selon l'invention, il aurait une largeur correspondant à une grosse canalisation et ce même lors d'une utilisation pour une petite canalisation. Les utilisateurs devraient alors faire une large tranchée uniquement pour le passage de l'outil.

D'autres avantages de l'invention se dégageront de la description qui va suivre en regard des dessins annexés qui ne sont donnés qu'à titre d'exemples non limitatifs.

Les figures 1a et 1b montrent en coupe les deux canalisations, d'une part en position avant l'emboîtement (figure 1a), et d'autre part en position emboîtée (figure 1b).

La figure 2 est une vue en perspective montrant un mode de réalisation de l'outil selon l'invention.

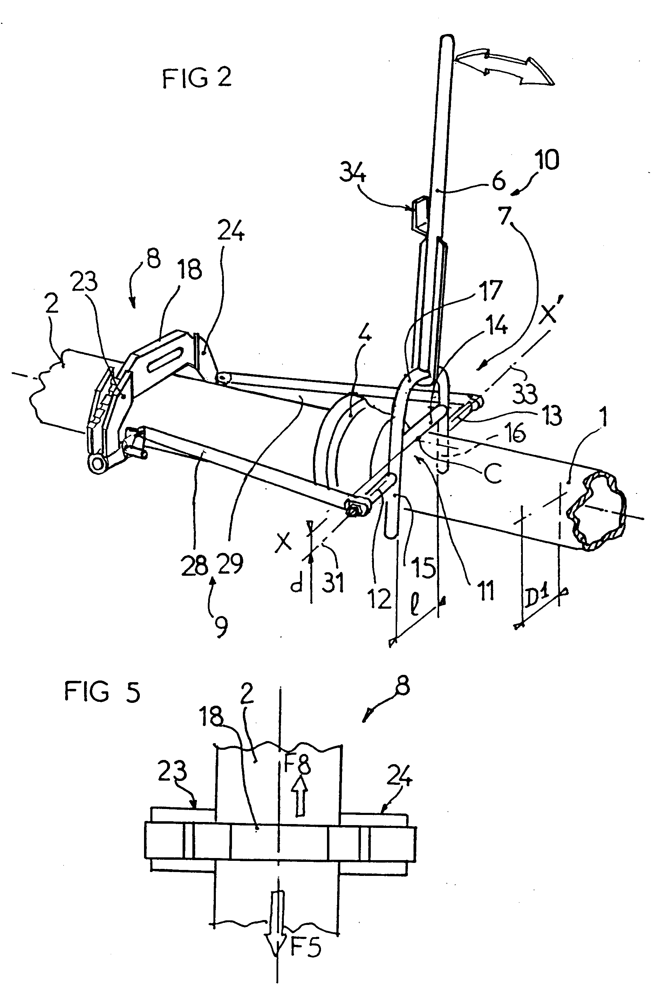

Les figures 3, 4 et 5 montrent des détails de l'outil selon l'invention.

Les figures 6, 7a, 7b, représentent différents éléments de l'outil.

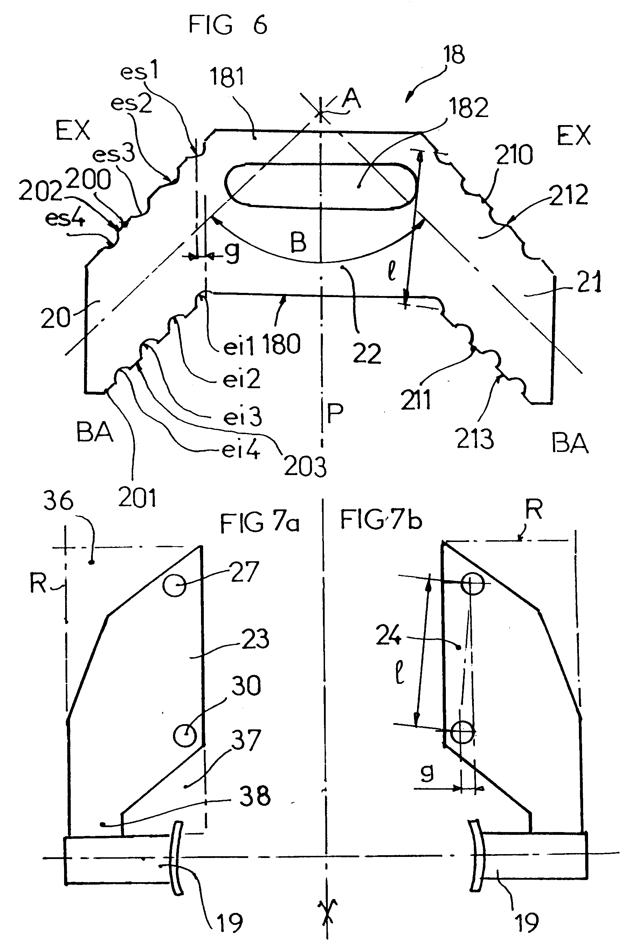

La figure 6 montre la pièce d'appui centrale.

Les figures 7a et 7b représentent les bras mobiles de retenu.

La figure 7c montre un détail en vue de dessus.

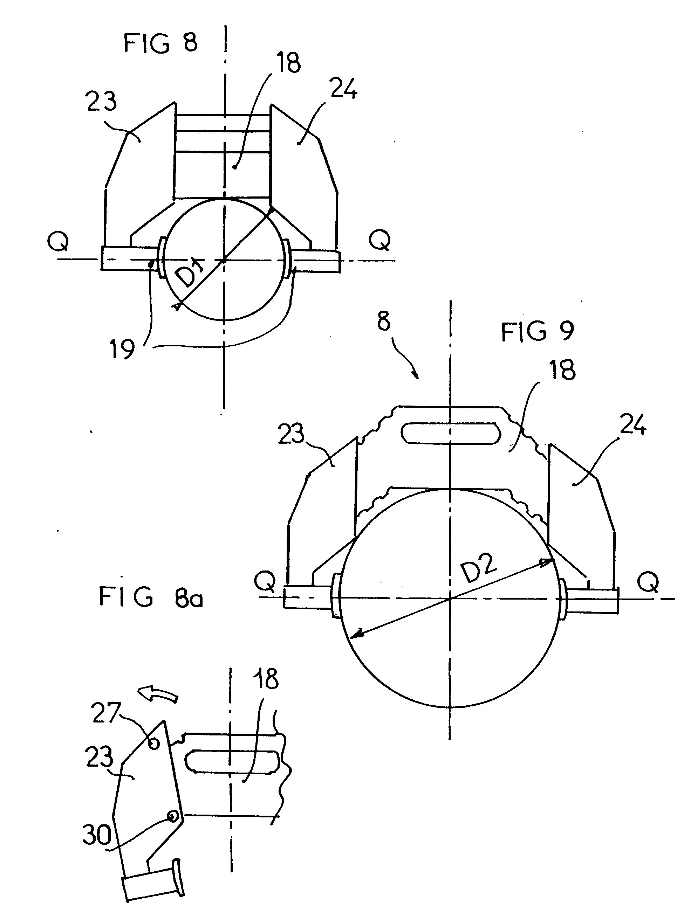

Les figures 8 et 9 représentent les moyens d'accrochage dans une utilisation pour une petite canalisation (figure 8) et pour une grosse canalisation (figure 9).

la figure 8a est une vue schématique montrant comment se fait le réglage.

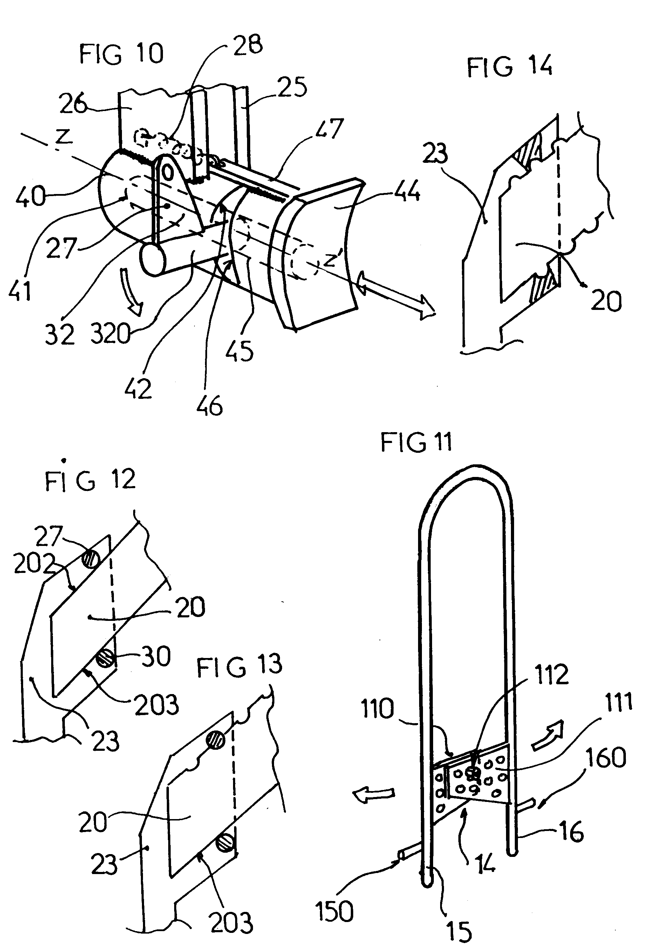

La figure 10 montre en perspective les moyens de serrage.

La figure 11 est une vue illustrant une variante des moyens de manoeuvre.

Les figures 12, 13, 14, sont des vues partielles montrant des variantes de réalisation.

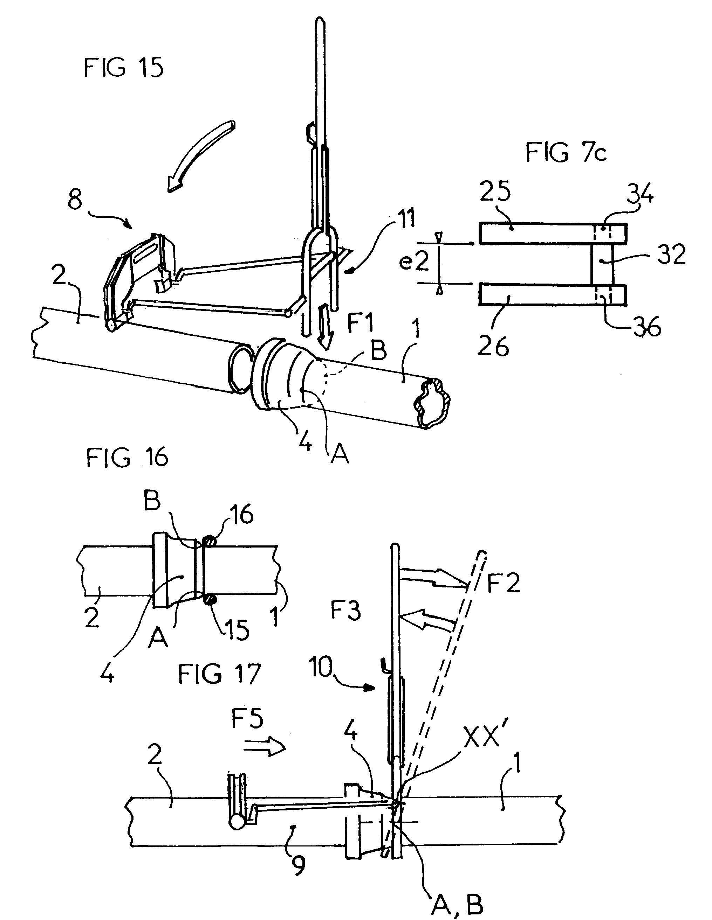

Les figures 15, 16, 17 représentent l'utilisation de l'outil selon l'invention.

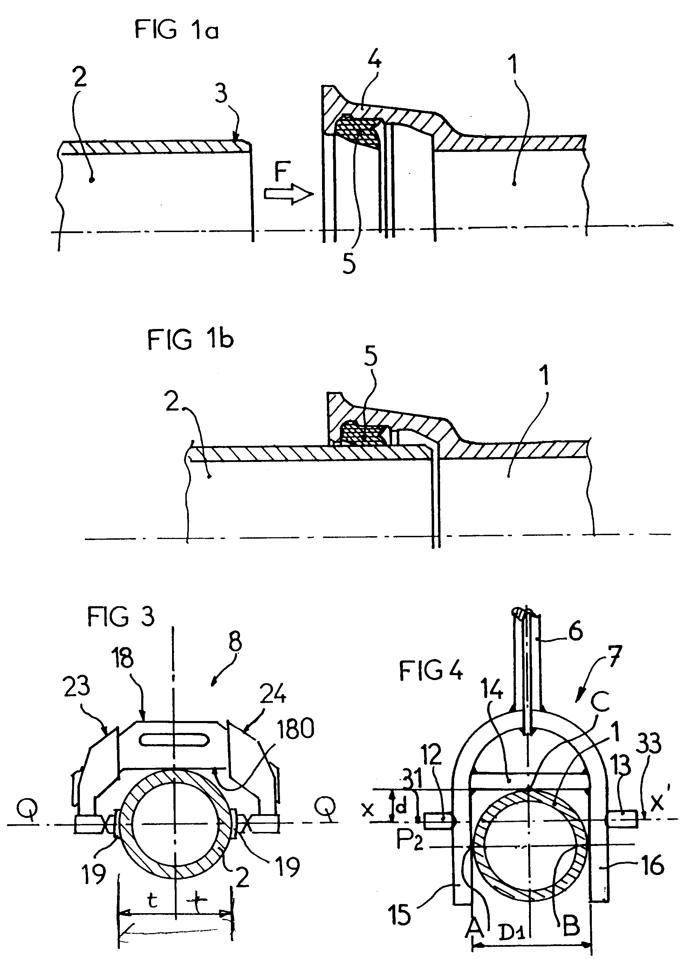

Les figures 1a et 1b représentent les deux canalisations en coupe, avant emboîtement (figure 1a), et emboîtées (Figure 1b). Comme on peut le voir sur ces figures, pour assembler les deux tuyaux ou canalisations, il suffit de faire pénétrer à force selon F, le bout uni (3) du deuxième tuyau (2) dans l'emboîtement (4) du premier tuyau (1), préalablement garni de son joint (5). La compression du joint assurant aussi l'étanchéité de l'emboîtement.

L'outil équipé du perfectionnement, selon l'invention, est déstiné à l'opération d'emboîtement, et comprend des moyens de manoeuvre (6) solidaires de moyens d'appui (7), formant un ensemble de manoeuvre (10), relié à un ensemble d'accrochage (8) par des moyens de traction (9). Les moyens d'appui (7) sont constitués par une fourche inférieure (11), ayant la forme générale d'un U renversé dont la largeur "l" est légèrement supérieure au diamètre extérieur "D1" du premier tuyau (1), et comprend d'une part de part et d'autre deux saillies latérales (12, 13), et d'autre part une barre d'appui (14) reliant les deux branches (15, 16) de ladite fourche (11). La partie supérieure (17) de la fourche (11) est prolongée vers le haut par les moyens de manoeuvre (6) constitués par un levier s'étendant vers le haut.

Comme on peut le voir par exemple à la figure 2 et 4, la fourche inférieure (11) est telle que l'axe XX' passant par les axes (31 et 33) soit situé au dessus du plan horizontal (P2) passant par les points d'appui A et B. La barre d'appui (14) est telle que la distance entre sa partie inférieure, et l'axe XX',"d" soit inférieure au diamètre extérieur "D1" du premier tuyau (1).

Les moyens de traction (9) sont constitués par des biellettes (28, 29) reliant les moyens de serrage (19) aux saillies latérales (12, 13) des moyens d'appui (7). A cet effet, la biellette (28) est articulée par l'une de ses extrémités sur le bras de tarction (27) et par l'autre de ses extrémités sur la fourche inférieure (11) autour d'un axe horizontal (31). Il en est de même pour la biellette (29) qui est articulée sur la fourche autour d'un axe (33).

Les moyens d'accrochage (8) selon l'invention sont constitués par une pièce centrale d'appui (18) comprenant des moyens de serrage (19) reliés à deux bras mobiles de retenues (23 et 24).

La pièce centrale d'appui (18) est une pièce en fer plat d'épaisseur "e1", constituée par une partie central (22) prolongée latéralement de part et d'autre par deux prolongements latéraux (20,21) s'étendant vers l'extérieur (EX) et vers le bas (BA). Ainsi lesdits prolongements latéraux (20 et 21) convergent vers le haut en un point (A) pour former ensemble un angle aigu (B).

Chacun des prolongements latéraux (20, 21) comprend un bord supérieur (200, 210) et un bord inférieur (201, 211) pour former des rampes supérieures (202, 212) et des rampes inférieures (203, 213). D'autre part, chacun des prolongements latéraux comprend des moyens de liaison (ML) pour les bras mobiles de retenue (23, 24). Ces moyens (ML) permettent d'une part de retenir lesdits bras (23, 24) par rapport à la pièce centrale d'appui (18), mais ils permettent aussi d'une part de régler la distance relative de ceux-ci "t" et d'autre part leur blocage et verrouillage dans la position choisie. A cet effet, chaque rampe comprend une succession d'encoches de retenue. Ainsi, la rampe supérieure (212, 202) comprend une première succession de quatre encoches supérieures de retenue (es1, es2, es3, es4) et chaque rampe inférieure (213, 203) comprend une deuxième succession de quatre encoches inférieures de retenue (ei1, ei2, ei3, ei4). Avantageusement, les encoches sont des profils en creux de forme circulaire.

Selon une disposition avantageuse, les écartements entre deux encoches successives de la première succession sont identiques à ceux entre deux encoches successives correspondantes de la deuxième succession. De plus, et comme cela apparaît plus particulièrement à la figure 6, la deuxième succession d'encoches (ei1, ei2, ei3, ei4) n'est pas directement disposée à la verticale de la première succession d'encoches (es1, es2, es3, es4) mais est légèrement décalée vers l'intérieur d'une distance "g".

Les rampes supérieures (212, 202) et inférieures (213, 203) sont parallèles et inclinées vers le bas pour former un angle "C" d'environ 45° avec l'horizon (H).

Par ailleurs, le bord inférieur (180) de la partie centrale (22) de la pièce d'appui (18) constitue une surface d'appui de la dite pièce d'appui sur la canalisation à emboîter.

Chaque bras mobile de retenue est constitué de deux plaques (25, 26) en fer plat identiques espacées l'une de l'autre d'une distance "e2" légèrement supérieure à l'épaisseur "e1" de la pièce centrale d'appui (18). Les deux plaques (25, 26) étant fixées de façon écartée l'une à l'autre par deux axes de retenue (27, 30). Un premier axe de retenue supérieur (27) et un deuxième axe de retenue inférieur (30). Les axes de retenue (27, 30) ont une section cylindrique dont la partie centrale (32) a un diamètre sensiblement égal au diamètre des encoches correspondantes des prolongements latéraux de la pièce centrale d'appui. La dite partie centrale (32) de longueur "e2" étant prolongée par deux extrémités (34, 35) de diamètre inférieur pour assurer l'écartement "e2". Chacune des plaques est réalisée dans une plaque en fer de forme restangulaire (R) comprenant deux découpes, une première découpe supérieure et extérieure (36) et une découpe inférieure et intérieure (37).

La découpe supérieure (36) étant destinée à alléger la pièce, tandis que la découpe inférieure (37) forme un prolongement inférieur de retenue (38) s'étendant vers le bas est destiné à retenir les moyens de serrage (19) pour la canalisation. Comme pour les encoches correspondantes de la pièce centrale d'appui, les deux axes de retenue (27 et 30) ne sont pas disposés à la verticale l'un de l'autre mais décalés latéralement de la même valeur "g".

La distance "l" de deux axes de retenue est égale à la distance "l" entre deux axes de deux encoches correspondantes (es1-ei1 ; es2-ei2 ; es3-ei3 ; es4-ei4).

Par coopération des axes de retenues (27, 30) avec deux encoches correspondantes (es1-ei1 ; es2-ei2 ; es3-ei3 ; es4-ei4) chacun des bras mobiles de retenue peut prendre quatre positions différentes (P1, P2, P3, P4) de telle sorte que les deux bras soient de plus en plus éloignés horizontalement l'un de l'autre. De plus, étant donné l'inclinaison des prolongements latéraux (20, 21) et des encoches de liaison, le plan de serrage (Q) est de plus en plus éloigné de la surface d'appui (180) de la pièce d'appui (18).

Grâce à la disposition selon l'invention le plan de serrage (Q) passe toujours par le plan diamétral du tube à emboîter et quel que soit son diamètre.

Les figures 8 et 9 représentent les moyens d'accrochage selon l'invention avec une canalisation de petit diamètre (figure 8) et une canalisation de grand diamètre (figure 9). On voit que grâce au système selon l'invention, le serrage de la canalisation se fait toujours diamètralement donc dans de bonnes conditions. En effet, à la figure 8, comme à la figure 9 avec une canalisation plus grosse, le plan de serrage (Q) est diamètral. Pour passer d'une position de serrage d'une canalisation de diamètre D1 (figure 8) à une position de serrage d'une canalisation plus grosse de diamètre D2 (figure 9) il suffit (figure 8a) de faire pivoter les bras de retenue pour désengager d'abord l'axe 27 puis l'axe 30 des encoches supérieures et inférieures, de déplacer lesdits bras vers une nouvelle position pour réengager les axes (27 et 30) dans d'autres encoches correspondant à la nouvelle position choisie desdits bras (23, 24).

A l'extrémité inférieure de chacun des bras mobiles de retenue, sont disposés des moyens de serrage (19). Ainsi sur chacun des bras est fixé une douille (40) ayant la forme générale d'un profil cylindrique percé dans l'axe par un trou cylindriquement (41). L'extrémité intérieure de la dite douille comprenant une rampe (42).

L'organe de serrage proprement dit étant constitué par une mâchoire mobile (44) solidaire d'une deuxième douille (45) comprenant une autre rampe (46) disposée en regard de la rampe (42). Un axe (32) logé dans le trou cylindrique (41) assure la liaison coulissante de la deuxième douille (45) par rapport à la première douille (40). De plus un ergot (320) transversal est fixé transversalement sur l'axe (32) et est disposé entre les deux rampes (42 et 46). Sur l'extrémité de l'ergot (320) est fixé un bras de traction (27) dont l'extrémité est reliée à la biellette de traction correspondante (28 ou 29). La rotation des ergots autour de l'axe (ZZ') provoquera l'écartement des deux rampes (42 et 46) et donc le déplacement de la deuxième douille (45) vers la position de serrage des mâchoires (44) correspondantes.

Pour condamner la rotation de la deuxième douille (45) autour de l'axe (ZZ') tout en permettant sa translation, on a fixé une petite plaque de blocage (47) sur ladite deuxième douille (45). L'extrémité libre de la plaque de blocage (47) étant d'une part disposée entre les deux plaques (25, 26) des bras mobiles de retenue et d'autre part sollicitée par un ressort (28) qui est destiné à retenir plaquée la rampe (46) sur l'ergot (320).

Bien entendu, la partie inférieure de l'ensemble de manoeuvre (10) peut être équipé d'un dispositif d'appui similaire, du moins dans son aspect général à l'ensemble d'accrochage selon l'invention.

Mais il peut aussi être tout autrement et par exemple comme cela est représenté à la figure 11. Selon cette variante, les moyens de manoeuvre (6) sont formés par un levier en forme de "U" renversé dont les extrémités inférieures (150, 160) constituent les branches (15, 16) de la fourche (11) du premier mode de réalisation.

Le levier en forme de "U" est par exemple en acier et donc élastiquement déformable en écartement. Ainsi l'adaption au diamètre du tube sera faite par écartement ou rapprochement des extrémités inférieures (150, 160). Le blocage dans la position choisie sera fait pas verrouillage des deux plaques internes (110, 111) l'une avec l'autre. Pour réaliser ce verrouillage, chacune des plaques internes (110, 111) comprend une succession de trous. Une fois l'écartement choisi, il suffit de mettre en regard deux trous correspondants et de bloquer les deux plaques internes dans cette position par un boulon (112). Notons aussi que les bords inférieurs des plaques internes constituent en même temps, la barre d'appui (14).

Pour utiliser l'outil selon l'invention, il suffit de poser d'une part, la fourche inférieure (11) selon F1 (figure 15) sur le premier tuyau (1), pour la placer juste derrière l'emboîtement (4), et d'autre part la pièce d'appui (18) selon F'1 sur le deuxième tuyau (2). Dans cette position la fourche prend appui par sa barre d'appui (14), sur le premier tuyau en un point supérieur C. Lors du basculement selon F2, il y a déplacement selon F5 de l'axe XX'. Cela a pour effet de tirer selon F5 sur les biellettes de traction (28 et 29), créant ainsi une traction selon F4 sur les bras de traction (27), provoquant ainsi d'une part le serrage et le maintien du deuxième tuyau (2) grâce au système de rampe, et d'autre par la traction, et donc le déplacement selon F5 de celui-ci, qui pénètre progressivement dans l'emboîtement (4) du premier tuyau (1). Le basculement selon F3 provoque d'une part la libération des mâchoires (44), assurant ainsi le desserrage du tuyau et d'autre part le déplacement selon F8 de l'ensemble d'accrochage (8) seul, sans entraînement dudit tuyau libéré. Les basculements successifs selon F2 et F3 auront pour effet de déplacer progressivement le deuxième tuyau à l'intérieur du premier. Il faut noter aussi que le basculement selon F2 se fait par appui des branches (15, 16) de la fourche (11) derrière l'emboîtement (4), et ce particulièrement aux points A et B, comme on peut le voir notamment à la figure 8a.

Les figures 12, 13 et 14 sont des schémas montrant des variantes.

Selon la variante de la figure 12, les bords supérieurs et inférieurs des prolongements latéraux n'ont pas d'encoches de liaison, mais constituent de simples rampes de blocage.

Selon la variante de la figure 13, seul le bord supérieur comprend des encoches.

La variante de la figure 14 montre que les encoches de liaison peuvent être remplacées par des saillies, et les axes de bras par des encoches correspondantes.

Avantageusement la partie centrale de la pièce d'appui (18) comprend un trou (182) pour former une poignée de portage (181).

Bien entendu, l'invention n'est pas limitée au mode de réalisation décrit et réprésenté à titre d'exemple, mais elle comprend tous les équivalents ainsi que leurs combinaisons.

## Revendications

1) Outil destiné à l'emboîtement de canalisations comprenant un ensemble de manoeuvre (10) relié à un ensemble d'accrochage (8) par des moyens de traction (9), ledit ensemble de manoeuvre (10) étant constitué par un levier (6) s'étendant vers le haut, relié à des moyens d'appui (7), tandis que l'ensemble d'accrochage (8) comprend une pièce d'appui (18) et des moyens de serrage (19) caractérisé en ce que ladite pièce d'appui (18) est constitué par une partie centrale d'appui (22) prolongée latéralement de part et d'autre par deux prolongements latéraux (20, 21), lesdits moyens de serrage (19) étant reliés à deux bras mobiles de retenue (23, 24) liés chacun de façon mobile et réglable au prolongement latéral correspondant par des moyens de liaison (es1, es2, es3, es4, ei1, ei2, ei3, ei4) disposés de façon à s'étendre vers l'extérieur (EX) et vers le bas (BA).

2) Outil selon la revendication 1, caractérisé en ce que les deux prolongements latéraux (20, 21) de la pièce d'appui, convergent vers le haut pour s'étendre chacun vers l'extérieur (EX) et vers le bas (BA).

3) Outil selon la revendication 2 caractérisé en ce que chacun des prolongements latéraux (20, 21) comprend un bord supérieur (200, 210) et un bord inférieur (201, 211) pour former chacun une rampe supérieure (202, 212) et une rampe inférieure (203, 213), les dites rampes supérieures étant parallèles auxdites rampes inférieures correspondantes.

4) Outil selon la revendication 3 caractérisé en ce que l'une au moins des rampes comprend une succession d'ancoches ou de saillies de liaison (es1, es2, es3, es4 - ei1, ei2, ei3, ei4).

5) Outil selon la revendication 4 caractérisé en ce que les encoches de liaisons (es1, es2, es3, es4 - ei1, ei2, ei3, ei4) sont des profils en creux de forme circulaire.

6) Outil selon la revendication 5 caractérisé en ce que les rampes supérieures (202, 212) comprennent une première succession d'encoches supérieures de retenue (es1, es2, es3, es4) tandis que les rampes inférieures (203, 213) comprennent une deuxième succession d'encoches inférieures de retenue (ei1, ei2, ei3, ei4), l'écartement entre deux encoches successives de ladite première succession d'encoches étant identique à l'écartement entre deux encoches correspondantes successives de ladite seconde succession.

7) Outil selon l'une quelconque des revendications précédentes caractérisé en ce que chacun des bras mobiles de retenue (23, 24) comprend au moins un axe de retenue (27, 30) destiné à coopérer avec l'une des encoches de liaison des prolongements latéraux de la pièce d'appui.

8) Outil selon la revendication 7 caractérisé en ce que chacun des bras mobiles de retenue (23, 24) comprend un premier axe de retenue supérieur (27) destiné à coopérer avec une des encoches de la première succession d'encoches et un deuxième axe de retenue inférieur (30) destiné à coopérer avec une encoche correspondante de la deuxième succession d'encoches.

9) Outil selon l'une quelconque des revendications précédentes, caractérisé en ce que les deux prolongements latéraux (20, 21) convergent vers le haut pour former un angle "B" d'environ 90 degrés.

FIG 1a

FIG 1b

FIG 3

FIG 4

FIG 2

FIG 5

FIG 6

FIG 7a | FIG 7b

FIG 8

FIG 8a

FIG 9

FIG 10

FIG 14

FIG 12

FIG 13

FIG 11

FIG 15

FIG 7c

FIG 16

FIG 17

**Office européen des brevets**

# RAPPORT DE RECHERCHE EUROPEENNE

Numero de la demande

EP    91 42 0428

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | GB-A-106 733 (FOTHERGILL) <br> * figures * <br> --- | 1 | F16L1/08 <br> B25B27/16 |
| A | US-D-503 436 (SATO) <br> --- | 1 | |
| A | FR-A-858 839 (LOPARD) <br> * figure * <br> ----- | 1 | |

| | |
|---|---|
| | **DOMAINES TECHNIQUES RECHERCHES (Int. Cl.5 )** <br><br> F16L <br> B25B <br> B66C |

Le présent rapport a été établi pour toutes les revendications

| Lieu de la recherche | Date d'achèvement de la recherche | Examinateur |
|---|---|---|
| LA HAYE | 10 MARS 1992 | BUDTZ-OLSEN A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)